# EUROPÄISCHE PATENTSCHRIFT

(11) **EP 1 869 494 B1**
(45) Veröffentlichungstag und Bekanntmachung des Hinweises auf die Patenterteilung: **14.11.2012**
(21) Anmeldenummer: 06724112.5
(22) Anmeldetag: 07.04.2006
(51) Int. Cl.: G01S 13/89

(54) **VERFAHREN UND VORRICHTUNG ZUR ABBILDUNG VON PRÜFOBJEKTEN MIT HILFE VON MILLIMETERWELLEN, INSBESONDERE ZUR KONTROLLE VON PERSONEN AUF VERDÄCHTIGE GEGENSTÄNDE**
METHOD AND DEVICE FOR IMAGING TEST OBJECTS BY MEANS OF MILLIMETER WAVES, ESPECIALLY FOR CHECKING INDIVIDUALS FOR SUSPICIOUS OBJECTS
PROCEDE ET DISPOSITIF POUR REPRESENTER DES OBJETS A CONTROLER A L'AIDE D'ONDES MILLIMETRIQUES, NOTAMMENT POUR LE CONTROLE DE PERSONNES A LA RECHERCHE D'OBJETS SUSPECTS

(30) Priorität: 08.04.2005 DE 102005016106
(43) Veröffentlichungstag der Anmeldung: 26.12.2007
(73) Patentinhaber: Smiths Heimann GmbH, 65205 Wiesbaden (DE); Technische Universität München, 80333 München (DE)
(72) Erfinder: DETLEFSEN, Jürgen, 82335 Berg (DE); JECK, Michael, 55122 Mainz (DE)
(74) Vertreter: Dietrich, Barbara
(86) Internationale Anmeldenummer: PCT/EP2006/003169
(87) Internationale Veröffentlichungsnummer: WO 2006/105977

(56) Entgegenhaltungen:
- US-A- 5 673 050
- US-A- 5 859 609
- BARA M ET AL: "High-speed focusing algorithm for circular synthetic aperture radar (C-SAR)" ELECTRONICS LETTERS, IEE STEVENAGE, GB, Bd. 36, Nr. 9, 27. April 2000 (2000-04-27), Seiten 828-830, XP006015186 ISSN: 0013-5194
- DALLINGER A ET AL: "Short Distance Related Security Millimeter-Wave Imaging Systems" GEMIC 2005, PROCEEDINGS OF THE GERMAN MICROWAVE CONFERENCE, UNIVERSITY OF ULM, 5-7 APRIL 2005, [Online] 5. April 2005 (2005-04-05), Seiten 244-246, XP002394809 Gefunden im Internet: URL:http://duepublico.uni-duisburg-essen.d e/servlets/DerivateServlet/Derivate-14581/ Paper/8b_2.pdf> [gefunden am 2006-08-15]

## Beschreibung

Die Erfindung betrifft ein Verfahren zur Abbildung von Prüfobjekten mit Hilfe von Millimeterwellen, insbesondere zur Kontrolle von Personen auf verdächtige Gegenstände, bei dem das Prüfobjekt entlang seines Umfangs sukzessiv mit Millimeterwellen beleuchtet wird, die gestreute Wellen empfangen und für eine bildhafte Darstellung des Prüfobjekts ausgewertet werden. Weiterhin betrifft die Erfindung eine Vorrichtung zur Durchführung eines erfindungsgemäßen Verfahrens.

Zur Kontrolle von Personen wie Flugpassagieren auf verdächtige Gegenstände, wie Waffen oder Sprengstoff, werden bekannterweise Metalldetektoren eingesetzt oder die Personen werden von Hand abgetastet. Metalldetektoren haben den Nachteil, dass keine nichtmetallischen gefährlichen Gegenstände wie Kunststoffwaffen oder Sprengstoffe erfasst werden. Das manuelle Abtasten ist zeitaufwendig und wird unter Umständen als Eingriff in die Intimsphäre empfunden.

Um diese Nachteile zu beheben, sind verschiedentlich berührungslos arbeitende Überwachungssysteme vorgeschlagen worden, bei denen die Personen mit Millimeterwellen abgescannt werden, um verdächtige Gegenstände zu detektieren. Das US-Patent 5,859,609 beschreibt ein derartiges Verfahren, bei dem die zu überprüfende Person auf einer Plattform steht während sie von einem senkrechten Antennenarray entlang ihres Umfangs sukzessive mit Millimeterwellen beleuchtet wird. Dazu umkreist das Antennenarray die Person und scannt sie umfänglich ab. Aus den vom Ziel reflektierten Wellen werden an einer Vielzahl von vorbestimmten Raumpositionen elektrische Signale erzeugt, aus denen ein Computer eine holographische Rekonstruktion des Ziels erzeugt. Ähnliche Verfahren sind in der US-A 5,455,590 und EP-A 0 925 517 beschrieben. Die bekannten Vorrichtungen zur Durchführung dieser Verfahren benötigen einen aufwendigen Aufbau und sind daher sehr teuer.

Aus der US 5,673,050 A ist ein Radar-Verfahren zur Detektion und Kartierung von unterhalb der Erdoberfläche befindlichen Objekten und Hohlräumen bekannt, bei dem die Radaraufnahmen mittels eines Luftfahrzeugs gemacht werden, das die zu prüfende Fläche umkreist und somit eine Kreisfläche untersucht. Die zu untersuchende Kreisfläche liegt als Teil der Erdoberfläche horizontal. Es erfolgt keine Auswertung der Streustrahlen in vertikaler Richtung. In Flugrichtung des Luftfahrzeugs erfolgt die Auswertung mittels des SAR-Prinzips.

Der Erfindung liegt daher die Aufgabe zu Grunde, ein Verfahren zur Abbildung von Prüfobjekten mit Hilfe von Millimeterwellen bereitzustellen, dessen Durchführung einen geringeren apparativen Aufwand erfordert und das daher kostengünstiger zu realisieren ist.

Diese Aufgabe wird nach der Erfindung dadurch gelöst, dass die Blickrichtung der Sendeantenne(n) und die Empfangsrichtung der Empfangsantenne(n) in einem Winkel von 15° bis 70°, bevorzugt 20° bis 35°, geneigt zur Längssachse des Prüfobjekts ver-laufen, und dass zur Auswertung der Streustrahlen in Richtung der Längsachse des Prüfobjekts das Pulsradar- oder FMCW-Radar-Prinzip und zur Auswertung quer zur Längsachse das SAR-Prinzip verwendet wird. Die Längsachse des Prüfobjekts verläuft vertikal, und seine sukzessive Beleuchtung entlang des Umfangs erfolgt in horizontaler Richtung quer zur Längsachse. Dabei werden bevorzugt die Beleuchtungseinrichtung und die Anordnung zur Streufelderfassung auf dem Mantel eines senkrechten Zylinders um das abzubildende Prüfobjekt herum bewegt.

Alternativ ist es auch möglich, das Prüfobjekt vor einer stillstehenden Beleuchtungs - und Empfangseinrichtung rotieren zu lassen. Ebenso ist es möglich, konstruktiv jedoch sehr aufwendig, die einzelnen Sende- und Empfangsantennen eines sich über den gesamten Umfang des Prüfobjekts erstreckenden Antennenarrays entsprechend zeitversetzt zu aktivieren.

Durch die umfängliche Bewegung quer zur Längsachse des Prüfobjekts wird jeder Punkt der Objektoberfläche aus mehreren Perspektiven erfasst. Die gemeinsame Auswertung dieser Perspektiven nach dem SAR-Prinzip (synthetische Apertur) entspricht einer virtuell deutlich größeren Antenne und führt zu einer Auflösungsverbesserung quer zur Längsachse des Objekts. Zur Auswertung in Richtung der Längsachse des Prüfobjekts wird das Pulsradar- oder FMCW-Radar-Prinzip (frequency modulated continuous wave) verwendet. So kann zu jedem abgestrahlten Signal das entsprechende reflektierte Signal identifiziert werden, und aus der Bestimmung der Laufzeit kann die Oberflächenstruktur rekonstruiert werden. Durch die Beleuchtung schräg von oben und/oder unten werden bei auf der Oberfläche des Prüfobjekts benachbarten Punkten möglichst große Laufzeitdifferenzen erzielt und so die Auflösung in Richtung der Längsachse verbessert.

Zum Empfang der reflektierten Wellen können entweder die Sendeantennen selbst oder getrennte Empfangsantennen verwendet werden. Die Auflösung lässt sich weiter verbessern, wenn ein Empfangs- und Sendesystem mit einer Sendeantenne und zwei zugeordneten Empfangsantennen verwendet wird, die einen bestimmten Abstand a voneinander aufweisen. Dann lässt sich aus dem bekannten Abstand a und der gemessenen Phasendifferenz zwischen den Signalen der beiden Empfangsantennen der momentan beleuchtete Punkt auf der Oberfläche eindeutig lokalisieren. Dieses Verfahren wird als Interferometrie bezeichnet.

Die zur Beleuchtung verwendeten Millimeterwellen haben eine Frequenz zwischen 1 GHz und 10 THz. Bevorzugt liegt die Frequenz der Millimeterwellen zwischen 50 GHz und 200 GHz.

Nachfolgend wird die Erfindung an Hand eines bevorzugten Ausführungsbeispiels näher erläutert.

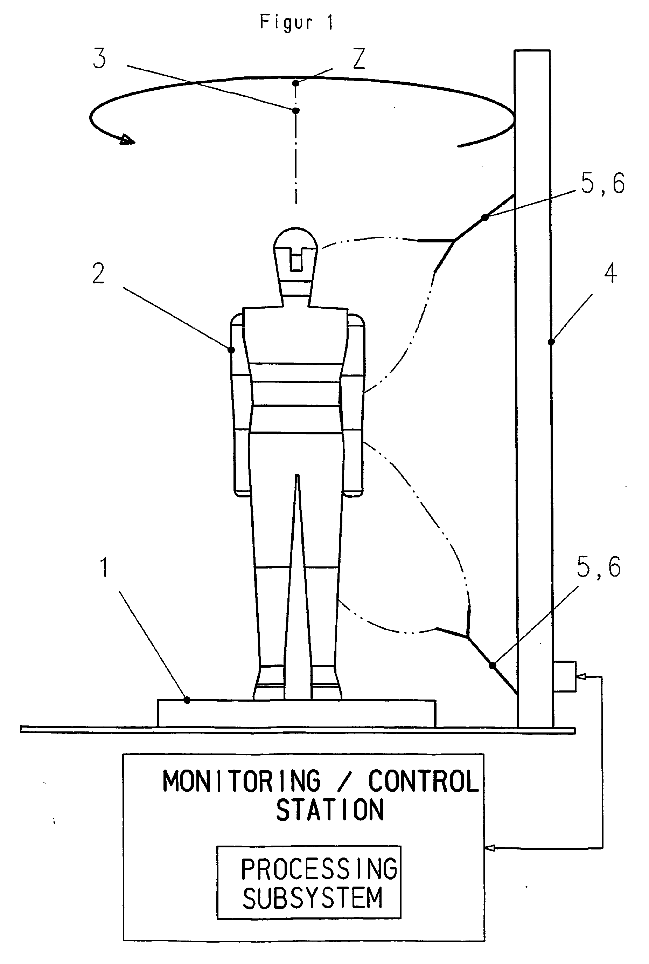

Figur 1 zeigt einen Schnitt durch eine erfindungsgemäße Vorrichtung.

Die in Figur 1 dargestellte Vorrichtung dient zur Kontrolle von Flugpassagieren auf verdächtige Gegenstände wie Waffen oder Sprengstoff beim Check-In auf einem Flughafen.

Die Vorrichtung enthält eine Plattform 1, auf der ein Passagier 2 steht, während die Kontrolle durchgeführt wird. Der Passagier 2 stellt somit das Prüfobjekt dar. Seine Längsachse 3 erstreckt sich bei der Prüfung in vertikaler Richtung.

Weiterhin enthält die Vorrichtung einen Rahmen 4, der mit Abstand von der Plattform 1 angeordnet und kreisförmig um die Längsachse 3 und somit entlang des Umfangs des Passagiers 2 schwenkbar ist. In dem Rahmen 4 ist zumindest ein Sende- und Empfangssystem 5, 6 mit jeweils einer Sende- und zumindest einer Empfangsantenne befestigt, deren Blick- und Empfangsrichtung in einem Winkel von 15° bis 70°, bevorzugt 20° bis 35°, geneigt zur Längsachse 3 des Prüfobjekts (Passagier 2) verlaufen. Bevorzugt ist - wie im vorliegenden Beispiel dargestellt - sowohl im unteren als auch im oberen Endbereich des Rahmens 4 jeweils ein Sende- und Empfangssystem 5, 6 angeordnet.

Die Sendeantennen des unteren und des oberen Systems 5, 6 sind entgegengesetzt zueinander angeordnet, so dass das Prüfobjekt (Passagier 2) schräg von unten nach oben und schräg von oben nach unten mit Millimeterwellen mit einer Frequenz von 1 GHz bis 10 THz, bevorzugt 50 GHz bis 200 GHz, beleuchtet wird. Beim Ausführungsbeispiel werden zur Beleuchtung Millimeterwellen in einem Frequenzband von 95 GHz bis 105 GHz verwendet.

Im vorliegenden Ausführungsbeispiel rotieren die Sende- und Empfangssysteme 5, 6 um das stillstehende Prüfobjekt (Passagier 2), um es entlang seines Umfanges sukzessiv mit Millimeterwellen zu beleuchten. Alternativ ist es auch möglich, dass Prüfobjekt (Passagier 2) vor einer stillstehenden Beleuchtungs- und Empfangseinrichtung rotieren zulassen. Dann enthält die Vorrichtung einen feststehenden Rahmen 4 mit zumindest einem Sende - und Empfangssystem und eine rotierbare Plattform, auf der der Passagier bei der Überprüfung steht. Eine weitere Alternative besteht darin, einzelne Sende- und Empfangsantennen in einem Antennenarray über den gesamten Umfang des Prüfobjektes anzuordnen. Die einzelnen Sende- und Empfangsantennen werden dann zeitversetzt nacheinander aktiviert, um den Umfang des Prüfobjekts sukzessiver zu beleuchten und entsprechende reflektierte Wellen zu empfangen.

Weiterhin enthält die Vorrichtung ein nicht in der Zeichnung dargestelltes Auswertesystem mit entsprechender Rechnerleistung, von der die empfangenen, vom Prüfobjekt gestreuten Wellen ausgewertet werden, um eine bildhafte Darstellung des Prüfobjekts zu erhalten. Die erstellten Bilder werden einer Bedienungsperson auf entsprechenden Anzeigegeräten angezeigt.

Zur Untersuchung werden die Sende- und Empfangssysteme 5, 6 in einer horizontalen Ebene und damit quer zur Richtung der Längsachse 3 kreisförmig um das Prüfobjekt herum bewegt. Dabei wird das Prüfobjekt entlang seines Umfangs sukzessiv mit Millimeterwellen beleuchtet. Durch die horizontale Bewegung um das Prüfobjekt wird jeder Punkt der Objektoberfläche aus mehreren Perspektiven erfasst. Die Auswertung quer zur Richtung der Längsachse 3 des Prüfobjekts erfolgt dabei nach dem SAR-Prinzip (synthetische Apertur). Dabei werden die Perspektiven gemeinsam ausgewertet, und es wird rechnerisch eine virtuell deutlich größere Antenne erzeugt. Dieses Verfahren führt zu einer Auflösungsverbesserung quer zur Längsachse 3 des Prüfobjekts.

Die Auswertung in Richtung der Längsachse 3 des Prüfobjekts erfolgt nach dem Pulsradar- oder FMCW-Radar-Prinzip. Die Verwendung von gepulster oder frequenzmodellierter kontinuierlicher Strahlung ermöglicht es, zu jedem abgestrahlten Signal das entsprechende reflektierte Signal zu identifizieren. Die Oberflächenstruktur wird dabei aus der Laufzeitdifferenz rekonstruiert. Da die Beleuchtung schräg von oben und schräg von unten in einem Winkel von 15° bis 70°, bevorzugt 20° bis 35°, geneigt zur Längsachse 3 erfolgt, werden bei benachbarten Punkten auf der Oberfläche möglichst große Laufzeitendifferenzen erzielt und so die Auflösung in Richtung der Längsachse 3 verbessert. Bevorzugt werden Sende- und Empfangssysteme 5, 6 verwendet, bei denen jeweils der Sendeantenne zwei in einem geringen Abstand voneinander entfernte Empfangsantennen zugeordnet sind. Durch den Einsatz dieser zusätzlichen Empfangseinrichtung mit versetzter Antenne für das Streufeld können durch eine interferometrische Auswertung der Streufeldinformationen zusätzliche Informationen über den Abstand des einzelnen Bildpunkt von der Längsachse 3 erhalten werden. Bei diesem Verfahren wird die gemessene Phasendifferenz zwischen den beiden Signalen der beiden Empfangsantennen ausgewertet, um den momentan beleuchteten Punkt auf der Oberfläche eindeutig zu lokalisieren.

Vorteilhaft werden zwei (wie im Ausführungsbeispiel) oder mehr Sende- und Empfangssysteme 5, 6 eingesetzt. So lassen sich die Streufeldinformationen der einzelnen Systeme rechentechnisch kombinieren oder überlagern. Dies ermöglicht auch die Auswertung von zwischen den einzelnen Systemen transportierten Streusignalen. Dabei kann ein System verwendet werden, dass zwei oder mehr voneinander wesentlich entfernte Frequenzbereiche abdeckt, die deutlich größer als die Bandbreite sind. Dabei kann entweder eine gemeinsame Verarbeitung mit dem Ziel einer besseren Auflösung erfolgen, oder durch Auswertung der Differenzinformationen können zusätzliche Abbildungsinformationen erhalten werden. Eine weitere Möglichkeit besteht darin, Differenzbilder bezüglich Phase und/oder Amplitude auszuwerten, die mit unterschiedlichen Polarisationskomponenten, unterschiedlichen Frequenzbereichen und/oder unterschiedlichen Beleuchtungseinrichtungen erhalten werden.

Falls mehrere Sende- und Empfangssysteme 5, 6 verwendet werden, können wechselseitige Störungen auftreten. Diese Störungen lassen sich durch Verwendung eines zu einem bestimmten Zeitpunkt vorhandenen Frequenzoffsets wieder ausfiltern. Dabei kann es vorteilhaft sein, einen Frequenzoffset zwischen den Systemen zu verwenden, dass deutlich größer ist als die Bandbreiten der gesendeten Strahlung, um unterschiedliche Streufeldinformationen zu erhalten.

## Patentansprüche

1. Verfahren zur Abbildung von Prüfobjekten (2) mit Hilfe von Millimeterwellen, insbesondere zur Kontrolle von Personen auf verdächtige Gegenstände, bei dem das Prüfobjekt (2) entlang seines Umfangs sukzessiv mit Millimeterwellen beleuchtet wird, und die gestreuten Wellen empfangen und für eine bildhafte Darstellung des Prüfobjekts (2) ausgewertet werden, **dadurch gekennzeichnet, dass** die Blickrichtung der Sendeantenne(n) und die Empfangsrichtung der Empfangsantenne(n) in einem Winkel von 15° bis 70°, bevorzugt 20° bis 35°, geneigt zur Längsachse (3) des Prüfobjekts (2) verlaufen, dass zur Auswertung der Streustrahlen in Richtung der Längsachse (3) des Prüfobjekts (2) das Pulsradar- oder FMCW-Radar-Prinzip und zur Auswertung quer zur Längsachse (3) das SAR-Prinzip verwendet wird, und dass die Längsachse (3) des Prüfobjekts (2) vertikal verläuft und seine sukzessive Beleuchtung entlang des Umfangs in horizontaler Richtung erfolgt.

2. Verfahren nach Anspruch 1, **dadurch gekennzeichnet, dass** die Beleuchtungseinrichtung und die Anordnung zur Streufelderfassung um das abzubildende Prüfobjekt (2) herum bewegt werden.

3. Verfahren nach einem der Ansprüche 1 bis 2, **dadurch gekennzeichnet, dass** zwei oder mehr Sende- und Empfangssysteme (5, 6) verwendet werden.

4. Verfahren nach Anspruch 3, **dadurch gekennzeichnet, dass** ein zu einem Zeitpunkt vorhandener Frequenzoffset zwischen den Systemen verwendet wird, um wechselseitige Störungen zu verhindern.

5. Verfahren nach einem der Ansprüche 1 bis 4, **dadurch gekennzeichnet, dass** ein Sende- und Empfangssystem (5, 6) verwendet wird, das zwei oder mehr voneinander deutlich mehr als die Bandbreite entfernte Frequenzbereiche abdeckt, wobei durch gemeinsame Verarbeitung eine bessere Auflösung erreicht wird oder durch Auswertung der Differenzinformationen zusätzliche Abbildungsinformationen erhalten werden.

6. Verfahren nach einem der Ansprüche 1 bis 5, **dadurch gekennzeichnet, dass** mindestens eine Zusatzempfangseinrichtung mit versetzter Antenne für das Streufeld verwendet wird, und dass die so gewonnene zusätzliche Information interferometrisch ausgewertet wird, um Informationen über den Abstand des einzelnen Bildpunktes von der Längsachse (3) zu erhalten.

7. Vorrichtung zur Durchführung eines der Verfahren nach den Patentansprüchen 1 bis 6 mit
- zumindest einem Sende- und Empfangssystem (5, 6), von dem das Prüfobjekt (2) entlang seines Umfangs sukzessiv mit Millimeterwellen beleuchtet wird und das die gestreuten Wellen empfängt, und
- einem Auswertesystem, von dem aus den empfangenen Wellen eine bildhafte Darstellung des Prüfobjekts (2) erstellt wird,
**dadurch gekennzeichnet, dass**
- die Sendeantenne(n) und die Empfangsantenne(n) jedes Sende- und Empfangssystems (5, 6) so ausgerichtet sind, dass die Blickrichtung der Sendeantenne(n) und die Empfangsrichtung der Empfangsantenne(n) in einem Winkel von 15° bis 70°, bevorzugt 20° bis 35°, geneigt zur Längsachse des Prüfobjekts (2) verlaufen, und
- dass von dem Auswertesystem zur Auswertung der Streustrahlen in Richtung der Längsachse des Prüfobjekts (2) das Pulsradar- oder FMCW-Radar-Prinzip und zur Auswertung quer zur Längsachse (3) das SAR-Prinzip verwendet wird, wobei die Längsachse (3) des Prüfobjekts (2) vertikal verläuft und seine Beleuchtung entlang des Umfangs in horizontaler Richtung erfolgt.

8. Vorrichtung nach Anspruch 7 **gekennzeichnet durch** zwei oder mehr Sende- und Empfangssysteme (5, 6), deren Sendeantennen schräg und entgegengesetzt zueinander angeordnet sind.

9. Vorrichtung nach Anspruch 7 oder 8, **dadurch gekennzeichnet, dass** das Sende - und Empfangssystem (5, 6) eine zusätzliche Empfangseinrichtung mit versetzter Antenne für das Streufeld ausweist, um die Streufeldinformationen interferometrisch auszuwerten.

## Claims

1. Method of imaging test objects (2) by means of millimetre waves, in particular for checking persons for suspicious objects, with which the test object (2) is successively exposed along its circumference to millimetre waves, and the scattered waves are received and evaluated for a pictorial illustration of the test object (2), **characterized in that** the line of sight of the transmission antenna(s) and the reception direction of the reception antenna(s) extend at an inclination angle of 15° to 70°, preferably 20° to 35°, to the longitudinal axis (3) of the test object (2), **in that** the pulsed radar principle or the FMCW radar principle is used for evaluating the scattered beams in the direction of the longitudinal axis (3) of the test object (2) and the SAR principle is used for evaluation transverse to the longitudinal axis (3), and **in that** the longitudinal axis (3) of the test object (2) extends vertically and its successive exposure takes place along the circumference in the horizontal direction.

2. Method according to Claim 1, **characterized in that** the exposure device and the arrangement for scattered field recording are moved around the test object (2) to be imaged.

3. Method according to any one of Claims 1 to 2, **characterized in that** two or more transmission and reception systems {5, 6) are used.

4. Method according to Claim 3, **characterized in that** a frequency offset present at a point in time between the systems is used in order to prevent reciprocal interference.

5. Method according to any one of Claims 1 to 4, **characterized in that** a transmission and reception system (5, 6) is used, which covers two or more frequency ranges separated from one another by significantly more than the bandwidth, wherein better resolution can be achieved by means of common processing or additional imaging information can be obtained through evaluation of the difference information.

6. Method according to any one of Claims 1 to 5, **characterized in that** at least one auxiliary reception device with an offset antenna is used for the scattered field, and **in that** the additional information thus obtained is evaluated interferometrically in order to obtain information about the distance of the individual image points from the longitudinal axis (3).

7. Apparatus for carrying out any one of the methods according to Claims 1 to 6 with
- at least one transmission and reception system (5, 6), by which the test object (2) is successively exposed to millimetre waves along its circumference and which receives the scattered waves, and
- an evaluation system, by which a pictorial illustration of the test object (2) is produced from the received waves,
**characterized in that**
- the transmission antenna(s) and the reception antenna(s) of each transmission and reception system (5, 6) are oriented in such a way that the line of sight of the transmission antenna(s) and the reception direction of the reception antenna(s) are inclined at an angle of 15° to 70°, preferably 20° to 35°, to the longitudinal axis of the test object (2), and
- **in that** the pulsed radar principle or FMCW radar principle is used by the evaluation system for evaluating the scattered beams in the direction of the longitudinal axis of the test object (2) and the SAR principle is used for evaluation transverse to the longitudinal axis (3), whereby the longitudinal axis (3) of the test object (2) extends vertically and its exposure takes place along the circumference in the horizontal direction.

8. Apparatus according to Claim 7, **characterized by** two or more transmission and reception systems (5, 6), whose transmission antennas are disposed so as to be inclined and opposed relative to one another.

9. Apparatus according to Claim 7 or 8, **characterized in that** the transmission and reception system (5, 6) comprises an additional reception device with offset antenna for the scattered field, in order to interferometrically evaluate scattered field information.

## Revendications

1. Procédé pour former à l'aide d'ondes millimétriques l'image d'objets (2) à vérifier, en particulier pour contrôler si des personnes portent des objets suspects, dans lequel la périphérie de l'objet (2) à vérifier est éclairée successivement par des ondes millimétriques, les ondes diffusées sont reçues et sont évaluées pour représenter l'image de l'objet (2) à vérifier, **caractérisé en ce que**
la direction d'observation de la ou des antennes émettrices et le dispositif de réception de la ou des antennes réceptrices sont inclinées d'un angle d'inclinaison de 15° à 70° et de préférence de 20° à 35° par rapport à l'axe longitudinal (3) de l'objet (2) à vérifier,
**en ce que** l'évaluation des faisceaux diffusés dans la direction de l'axe longitudinal (3) de l'objet (2) à vérifier utilise le principe du radar pulsé ou du radar FMCW et l'évaluation transversale par rapport à l'axe longitudinal (3) utilise le principe SAR et
**en ce que** l'axe longitudinal (3) de l'objet (2) à vérifier s'étend à la verticale et son éclairage successif le long de la périphérie s'effectue dans la direction horizontale.

2. Procédé selon la revendication 1, **caractérisé en ce que** le dispositif d'éclairage et l'agencement de la détection du champ diffusé sont déplacés autour de l'objet (2) à vérifier dont l'image doit être formée.

3. Procédé selon l'une des revendications 1 et 2, **caractérisé en ce qu'**il utilise deux ou plusieurs systèmes d'émission et de réception (5, 6).

4. Procédé selon la revendication 3, **caractérisé en ce que** pour empêcher des interactions perturbatrices, il utilise un décalage de fréquence entre les systèmes à un instant donné.

5. Procédé selon l'une des revendications 1 à 4, **caractérisé en ce qu'**il utilise un système d'émission et de réception (5, 6) qui couvre deux ou plusieurs plages de fréquences nettement plus éloignées les unes des autres que la largeur de bande, un traitement commun permettant d'obtenir une meilleure résolution ou des informations supplémentaires de formation d'image étant obtenues par évaluation des informations de différence.

6. Procédé selon l'une des revendications 1 à 5, **caractérisé en ce qu'**au moins un dispositif supplémentaire de réception à antenne décalée est utilisé pour le champ diffus et **en ce que** l'information supplémentaire ainsi obtenue est évaluée par interférométrie pour obtenir des informations concernant la distance entre chaque point d'image et l'axe longitudinal (3).

7. Dispositif destiné à la mise en oeuvre d'un des procédés selon les revendications 1 à 6 et présentant :
au moins un système d'émission et de réception (5, 6) par lequel la périphérie de l'objet (2) à vérifier est éclairée successivement par des ondes millimétriques, les ondes diffusées étant reçues et
un système d'évaluation par lequel une image représentant l'objet (2) à vérifier est formée à partir des ondes reçues,
**caractérisé en ce que**
la ou les antennes émettrices et la ou les antennes réceptrices de chaque système d'émission et de réception (5, 6) sont orientées de telle sorte que la direction d'observation de la ou des antennes émettrices et la direction de réception de la ou des antennes réceptrices sont inclinées d'un angle de 15° à 70° et de préférence de 20° à 35° par rapport à l'axe longitudinal de l'objet (2) à vérifier,
**en ce que** le système d'évaluation qui évalue les faisceaux diffus dans la direction de l'axe longitudinal de l'objet (2) à vérifier utilise le principe du radar pulsé ou du radar FMCW et
**en ce que** l'évaluation transversale par rapport à l'axe longitudinal (3) utilise le principe SAR, l'axe longitudinal (3) de l'objet (2) à vérifier s'étendant à la verticale et l'éclairage de sa périphérie s'effectuant dans la direction horizontale.

8. Dispositif selon la revendication 7, **caractérisé par** deux ou plusieurs systèmes d'émission et de réception (5, 6) dont les antennes d'émission sont disposées obliquement et en opposition mutuelle.

9. Procédé selon les revendications 7 ou 8, **caractérisé en ce que** le système d'émission et de réception (5, 6) présente un dispositif supplémentaire de réception à antenne décalée pour évaluer par interférométrie les informations du champ diffus.
